# EUROPEAN PATENT APPLICATION

(11) **EP 1 731 798 A1**
(43) Date of publication of application: **13.12.2006**
(21) Application number: 06113468.0
(22) Date of filing: 04.05.2006
(51) Int. Cl.: F16H 48/20, F16H 48/30, B60K 17/16

(54) **Differential gear**

(30) Priority: 17.05.2005 SE 0501116
(71) Applicant: Scania CV AB (publ), 151 87 Södertälje (SE)
(72) Inventor: Meijer, Lars, 15168, Södertälje (SE)

(57) **Abstract**

A differential gear (2) for a motor vehicle (1) comprising an engine (18), a first powered wheel (3) and a second powered wheel (4) is described. The differential gear (2) comprises a movable locking element (23) for locking the differential gear (2), a movement housing (26) and a mobile element (28) which is movable relative to the movement housing (26) and which is connected to the locking element (23) in order to move the locking element (23). A contactless sensor (38) is arranged on the movement housing (26), whereby the contactless sensor (38) is adapted to detecting the position of the mobile element (28).

## Description

### Technical field

The present invention relates to a differential gear for at least two driveshafts which is provided with a lock for locking the mutual rotation of the two driveshafts, and to a motor vehicle provided with such a differential gear.

### Description of the state of the art

Differential gears have been used in motor vehicles since the infancy of the motor vehicle. A differential gear is arranged between driving wheels of a motor vehicle to allow them to rotate at different speeds, which may be necessary, for example, when the motor vehicle is travelling along a curve. A differential gear is usually arranged with an input driveshaft connected to a hub. At least one angled gearwheel is arranged in the hub so as to be rotatable perpendicular to the axis of rotation of the hub. Two output driveshafts connected to powered wheels are adapted to pivoting in the direction of rotation of the hub via an angled gearwheel which is arranged on each of the output driveshafts, whereby each of the angled gearwheels is in engagement with the hub gearwheel. The output driveshafts can differ in speed as a result of the hub gearwheel being adapted to pivoting relative to the hub. When the running surface is bad, it may be necessary for the differential to lock in order to prevent one powered wheel from sliding on the running surface while the other stands still. A differential brake or differential lock is then needed in order to transmit the engine's driving power to both wheels.

There are various different types of differential brakes/differential locks. In passenger cars, disc couplings are sometimes used for locking the differential gear. An example of a disc coupling is described in American patent application US2004/0132572 A1. Disc couplings can be used both as differential locks and as differential brakes, whereby the disc coupling reduces the speed difference between powered wheels.

In heavy motor vehicles such as buses and trucks, however, it is not advantageous to use disc couplings, since it is difficult to make them strong enough to withstand the often high torque from the engine in such vehicles. In most heavy motor vehicles, so-called claw couplings are therefore used for locking the differential. Claw couplings work on the principle that a first element engages with a second element so that the two elements cannot rotate relative to one another. A differential gear with such a claw coupling is therefore either locked or unlocked. In most cases where a claw coupling is provided in a differential gear, the first element of the claw coupling is adapted to locking one of the driveshafts relative to the hub. Locking one of the shafts also locks the hub gearwheel and hence also the other shaft.

The means used for operating the first element of the claw coupling is usually an air cylinder adapted to causing the first element to move between two different positions. The means most commonly used for detecting whether the differential gear is locked or unlocked is a mechanically influenceable electrical sensor in the air cylinder for detecting the position of the air cylinder and hence the position of the claw coupling. Placing the sensor on the air cylinder makes it readily accessible for servicing and easy to replace. To prevent corrosion and mechanical damage to the sensor in its location under the vehicle, it needs to be encased. A problem with an encased sensor is that it occupies a large amount of space on the differential gear.

### Description of the invention

An object of the present invention is to provide a differential gear and a motor vehicle with such a differential gear, which differential gear is provided with a claw coupling for locking the differential gear and with a sensor for detecting whether the differential gear is locked and is so arranged that the sensor occupies less space and needs less maintenance than in solutions according to the state of the art, while at the same time being as well-protected from corrosion as sensors in solutions according to the state of the art.

This object is fulfilled with a differential gear according to the present invention and a motor vehicle equipped with such a differential gear.

Further advantages of the invention are afforded by the features in the attached subclaims.

A first aspect of the present invention takes the form of a differential gear for a motor vehicle comprising an engine, a first powered wheel and a second powered wheel. The differential gear comprises a gear housing, a hub arranged inside the gear housing so as to be rotatable about a first axis of rotation and adapted to being driven by the engine, a first rotatable gearwheel adapted to being connected to the first powered wheel, a second rotatable gearwheel adapted to being connected to the second powered wheel, and a third gearwheel which is in engagement with the first gearwheel and the second gearwheel and which is supported in the hub so as to be rotatable about a second axis of rotation which is substantially perpendicular to the first axis of rotation. The differential gear further comprises a locking element which is movable in order to connect the first gearwheel to the hub, a movement housing firmly attached to the gear housing, and a mobile element which is movable relative to the movement housing and which is connected to the locking element in order to cause the locking element to move between at least a first position and a second position as a result of movement of the mobile element between a first position and a second position. Only in its first position is the locking element in engagement with both the hub and the first gearwheel. The differential gear is characterised in that a contactless sensor is arranged on the movement housing, whereby the contactless sensor is adapted to detecting the mobile element in either the first position or the second position.

Arranging a differential gear with a contactless sensor according to the invention results in a differential gear which needs less maintenance than differential gears according to the state of the art, since contactless sensors are not subject to wear. It also makes it possible to use a sensor which occupies less space than a mechanical sensor.

The contactless sensor may be an optical sensor. There are many variants of optical sensor. Optical sensors are based on the principle that a transmitter emits light which is received by a receiver. One variant of optical sensor detects when an object breaks a beam of light between the transmitter and the receiver. Another variant of optical sensor detects a beam of light reflected by an object and measures the distance by measuring the time between transmitting a pulse of light and receiving a reflected pulse of light. A disadvantage of optical sensors in the context of a differential gear according to the invention is that there is oil in the differential gear.

As oil can affect the transmission of light, the optical sensor therefore needs to be shielded from the portions of the differential gear which contain oil.

According to a preferred embodiment of the present invention, a magnet is provided on the mobile element and the contactless sensor is a Hall effect sensor. Placing a Hall effect sensor in a magnetic field results in a signal from the Hall effect sensor which depends on the strength of the magnetic field. Arranging a magnet on the mobile element and a Hall effect sensor on the movement housing will make the distance between the magnet and the Hall effect sensor depend on the position of the mobile element. As the magnetic field about a magnet decreases with distance from the magnet, the magnetic field at the Hall effect sensor will vary with the distance from the magnet. The position of the mobile element can be determined by measuring the signal from the Hall effect sensor.

The magnet is with advantage a permanent magnet. A permanent magnet needs no power supply, which is an advantage when it is situated on the movable mobile element.

The magnet and the Hall effect sensor may be arranged relative to one another in such a way that the magnetic field at the Hall effect sensor decreases sharply when the mobile element moves from either its positions to the other position. Arranging the magnet and the Hall effect sensor in this manner results in a clear relationship between the position of the mobile element and the signal from the Hall effect sensor.

The magnet and the Hall effect sensor may be arranged in such a way that the permanent magnet is nearest to the Hall effect sensor when the mobile element is in its first position. This results in the strongest signal from the Hall effect sensor when the differential gear is locked.

The differential gear may be arranged in such a way that the movement housing comprises a longitudinal axis, whereby the mobile element is arranged for movement along the longitudinal axis. A mobile element movable along a longitudinal axis can be provided in many different ways and makes a compact differential gear possible.

The movement housing may comprise an internal space in the form of a cylinder, whereby the mobile element comprises a piston arranged in the cylinder. A piston may be adapted to being moved, for example, hydraulically or by compressed air. The latter alternative is particularly advantageous, since heavy vehicles, which the invention is particularly intended for, are often provided with a compressed air compressor and a compressed air reservoir.

The differential gear may be arranged in such a way that the first gearwheel can rotate about the first axis of rotation. This makes a compact and relatively uncomplicated locking element possible. It is also possible for the first gearwheel to be rotatable about an axis which forms an angle with the first axis.

In cases where the first gearwheel can rotate about the first axis of rotation, the locking element may be movable along the first axis of rotation. The locking element may then, for example, be arranged concentrically with the hub.

The first gearwheel may comprise a first splined surface and the locking element may comprise a second splined surface arranged to be in engagement with the first splined surface when the locking element is in its first position. Such splined surfaces provide the possibility, between the locking element and the first gearwheel, of a connection which can transmit a relatively large moment. The splined surfaces may be so arranged that they have a normal which is parallel with the first axis of rotation, but they may also be arranged so that their normal is perpendicular to the first axis of rotation. In the latter case, the splined surfaces surround the first axis of rotation.

A second aspect of the present invention takes the form of a motor vehicle which comprises a differential gear according to the first aspect of the present invention. The advantages of such a motor vehicle are the same as described with respect to the differential gear according to the first aspect of the present invention.

Preferred embodiments of the invention are described below with reference to the drawings.

### Brief description of the drawings

Fig. 1 depicts a motor vehicle with a differential gear according to an embodiment of the present invention.
Fig. 2 depicts in more detail the differential gear in Fig. 1 in cutaway section when the differential gear is unlocked.
Fig. 3 depicts in more detail the differential gear in Fig. 1 in cutaway section when the differential gear is locked.

### Description of preferred embodiments of the invention

In the following description of preferred embodiments of the invention, the same features are indicated by the same reference notations in the various drawings.

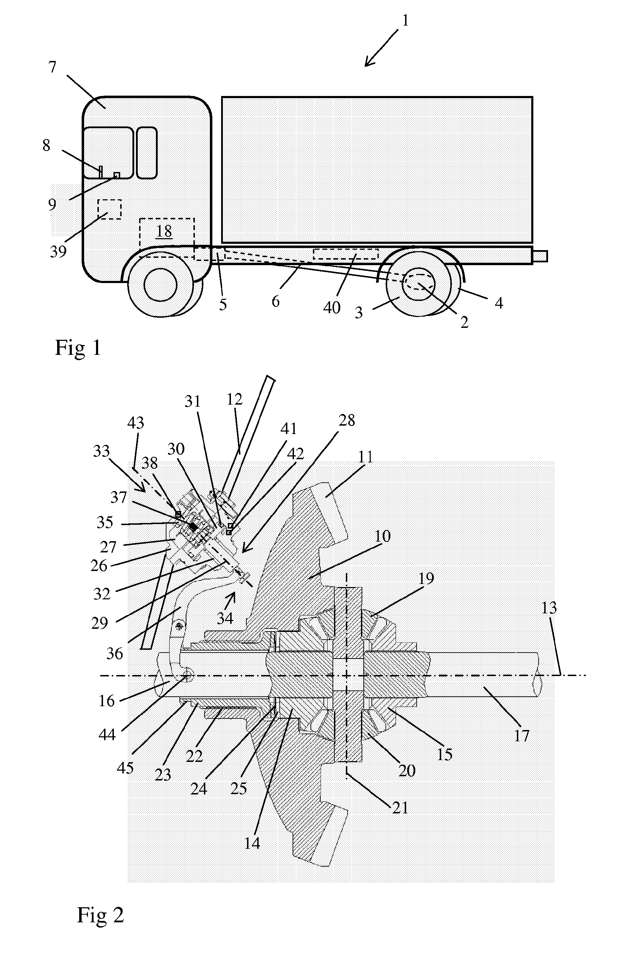

Fig. 1 depicts a motor vehicle 1 with a differential gear 2 according to an embodiment of the present invention. The motor vehicle 1 comprises a first powered wheel 3 and a second powered wheel 4 which are adapted to being driven by the differential gear 2. The motor vehicle 1 further comprises an engine 18, a gearbox 5 connected to the engine 18, and a propeller shaft 6 arranged between the gearbox 5 and the differential gear 2. The differential gear 2 also comprises a locking element, described in more detail below, for locking the differential gear. The motor vehicle 1 also comprises a driver's cab 7 in which there is a operating device 8 for engaging the locking element, and an indicating lamp 9 which indicates that the differential gear 2 is locked. The motor vehicle 1 also comprises a control unit 39 which is connected to the operating device 8 and the indicating lamp 9.

When the vehicle is in motion, the engine 18 drives the powered wheels 3, 4 via the gearbox 5, the propeller shaft 6 and the differential gear 2. When the differential lock is not engaged, the powered wheels can rotate at different speeds. When the driver of the motor vehicle 1 operates the operating device 8, the differential lock is engaged so that the two powered wheels are compelled to rotate at the same speed. When the differential lock is engaged, this is indicated by the indicating lamp 9 being lit.

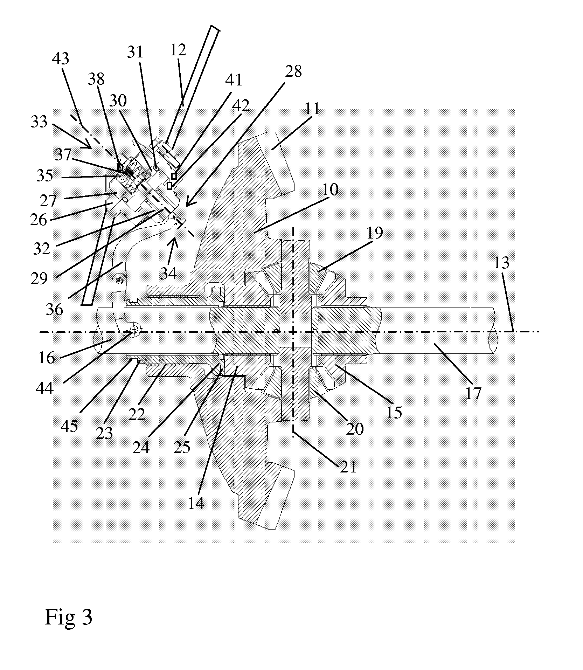

An embodiment of the differential gear 2 will now be described in more detail with reference to Figs. 2 and 3. The differential gear 2 comprises a hub 10 depicted in cutaway section in Fig. 2 and Fig. 3. The hub 10 comprises gear teeth 11 along its periphery. A gearwheel (not depicted) arranged on the propeller shaft 6 is adapted to causing the hub 10 to rotate. The hub is arranged for rotation about a first axis of rotation 13 within a gear housing 12. Only a small portion of the gear housing 12 is depicted in Fig. 2 and Fig. 3. A first rotatable gearwheel 14 is arranged for rotation relative to the hub 10 about the first axis of rotation 13. A second gearwheel 15 is arranged for rotation relative to the hub 10 about the first axis of rotation 13. A first driveshaft 16 is arranged in connection with the first gearwheel 14, while a second driveshaft 17 is arranged in connection with the second gearwheel 15. The first powered wheel 3 is adapted to being connected to the first driveshaft 16, while the second powered wheel 4 is adapted to being connected to the second driveshaft 17. A third gearwheel 19 and a fourth gearwheel 20 are each arranged in engagement both with the first gearwheel 14 and the second gearwheel 15. It is possible to omit the fourth gearwheel 20, but the load on the third gearwheel will be less if the differential gear 2 also comprises the fourth gearwheel 20. The third gearwheel 19 and the fourth gearwheel 20 are both arranged for rotation about a second axis of rotation 21 which is substantially perpendicular to the first axis of rotation 13.

The hub 10 has running through it a hole 22 in which a movable locking element 23 is arranged for movement in the direction of the first axis of rotation 13 relative to the hub 10. For the purpose here concerned, the hole 22 running through the hub 10 is provided with a first set of splines along its inner circumference, and the locking element 23 is provided with a second set of splines along its outer circumference, whereby the second set of splines is arranged to be in engagement with the first set of splines in order to constitute a torque-transmitting connection. Torque can thus be transmitted between the locking element 23 and the hub 10 while at the same time the locking element 23 can be moved in the direction of the first axis of rotation 13. The locking element 23 comprises a first splined surface 24 facing towards the first gearwheel 14, which has a second splined surface 25 facing the locking element 23, which second splined surface 25 is adapted to being in engagement with the first splined surface 24. The locking element 23 is movable along the first axis of rotation 13 between a first position in which the locking element 23 is in engagement with the first gearwheel 14 as a result of the first splined surface 24 being in engagement with the second splined surface 25, and a second position in which the locking element 23 is not in engagement with the first gearwheel 14.

A movement housing 26 is arranged in the gear housing 12, which movement housing comprises an internal space 27 in the form of a cylinder. A mobile element 28 which comprises a stem 29 and a piston 30 arranged on the stem 29, whereby the piston 30 is adapted to running in the internal space 27 along a piston axis 43 and whereby the stem 29 is arranged in the direction of the piston axis 43. The piston 30 is provided with a seal 31 against the walls of the internal space 27 so that the piston 30 divides the internal space 27 into two portions. The stem 29 is adapted to running through a stem hole 32 between the internal space 27 and the outside of the movement housing 26. The stem 29 comprises a first end 33 arranged in the internal space, and a second end 34 arranged outside the movement housing 26. A coil spring 35 is arranged in the internal space 27 between the movement housing 26 and the piston 30, in contact with the side of the piston 30 which faces away from the stem hole 32. The coil spring 35 is thus adapted to urging the piston toward the stem hole 32. A compressed air valve 42 is arranged between a compressed air reservoir 40 and the movement housing to supply compressed air to the internal space 27 between the movement housing 26 and the side of the piston 30 which faces towards the stem hole 32, in order thereby to urge the piston 30 and the stem 29 along the piston axis 43 away from the stem hole 32. The locking element 23 is connected to the mobile element 28 by a link arm 36. The link arm comprises two spigots adapted to running in a groove 45 on the locking element 23. The drawing shows only a first spigot 44. A magnet 37 in the form of permanent magnet is arranged in the first end 33 of the stem 29 substantially centrally with respect to the piston axis 43. A contactless sensor 38 in the form of a Hall sensor is arranged in the internal space 27 of the movement housing 26 centrally with respect to the piston axis 43. The control unit 39 is arranged in communication with the contactless sensor 38, the compressed air valve, the operating device 8 and the indicating lamp 9. Proximity of the magnet 37 to the contactless sensor 38 results in the generating of a signal which is received by the control unit, which then sends current to the indicating lamp 9 so that it is lit. There is also an outlet valve 41 connected to the control unit 39 to release air from the internal space 27. It is possible to omit the outlet valve and allow the compressed air to leave the internal space via the compressed air valve 42.

In Fig. 2, the mobile element 28 is in its second position and the locking element 23 is in its second position in which the first splined surface is not in engagement with the second splined surface. The locking element 23 is thus not in engagement with the first gearwheel 14. The first gearwheel 14 can thus rotate at a different speed from the locking element 23 and the hub 10. For the locking element 23 to be in its second position, the mobile element 28 needs to be in its second position. When the mobile element is in its second position as depicted in Fig. 2, the magnet 37 is at a distance from the contactless sensor 38, with the result that no signal is received by the control unit 39. No current is therefore sent to the indicating lamp 9, which remains unlit.

When a driver of the vehicle operates the operating device 8, this is registered by the control unit 39, which then causes the compressed air valve 42 to open so that compressed air flows into the internal space 27 and pushes the piston 30 and the stem 29 along the piston axis 43 away from the stem hole 32 so that the mobile element 28 reaches its first position. Fig. 3 depicts the differential gear 2 when the mobile element 28 is in its first position. When the mobile element 28 is in its first position, the locking element 23 is in its first position in which the first splined surface 24 is in engagement with the second splined surface 25, with the result that the locking element 23 is in engagement with the first gearwheel 14. When the locking element 23 is in engagement with the first gearwheel 14, the first gearwheel 14 has to rotate at the same speed as the locking element 23 and the hub 10. Hence, the second gearwheel 15 has also to rotate at the same speed as the first gearwheel 14 and the hub 10. When the mobile element 28 is in its first position, the magnet 37 is close to the contactless sensor 38. The control unit 39 then receives a signal from the contactless sensor 38 and sends current to the indicating lamp 9, which then lights up to indicate that the differential gear 2 is locked. When the driver again operates the operating device, the control unit 39 causes the outlet valve 41 to open so that the air can be released from the internal space 27. The mobile element 28 then returns to its second position so that the locking element 23 returns to its second position and the indicating lamp goes out.

A specialist within the field may modify the embodiments described above in many ways without departing from the concept of the present invention, which is only limited by the attached claims.

The contactless sensor may be of another type than a Hall sensor. The contactless sensor may for example be an optical sensor.

Although the motor vehicle in the above description comprises only two driving wheels, it is of course also possible to implement the invention on motor vehicles with more than two driving wheels.

The magnet need not be a permanent magnet but may alternatively be an electromagnet.

## Claims

1. A differential gear (2) for a motor vehicle (1) comprising an engine (18), a first powered wheel (3) and a second powered wheel (4), which differential gear (2) comprises a gear housing (12), a hub (10) arranged within the gear housing (12) so as to be rotatable about a first axis of rotation (13) and adapted to being driven by the engine (18), a first rotatable gearwheel (14) adapted to being connected to the first powered wheel (3), a second rotatable gearwheel (15) adapted to being connected to the second powered wheel (4), a third gearwheel (19) which is in engagement with the first gearwheel (14) and the second gearwheel (15) and is supported in the hub (10) so as to be rotatable about a second axis of rotation (21) which is substantially perpendicular to the first axis of rotation (13), a locking element (23) which is movable in order to connect the first gearwheel (14) to the hub (10), a movement housing (26) firmly attached to the gear housing (12), and a mobile element (28) which is movable relative to the movement housing (26) and is connected to the locking element (23) in order to move the locking element (23) between at least a first position and a second position as a result of movement of the mobile element (28) between a first position and a second position, whereby only in its first position is the locking element (23) in engagement both with the hub (10) and with the first gearwheel (14), **characterised in that** a contactless sensor (38) is arranged on the movement housing (26), whereby the contactless sensor (38) is adapted to detecting the mobile element (28) in either the first position or the second position.

2. A differential gear (2) according to claim 1, whereby the contactless sensor (38) is an optical sensor.

3. A differential gear (2) according to claim 1, whereby a magnet (37) is arranged on the mobile element (28) and whereby the contactless sensor (38) is a Hall effect sensor.

4. A differential gear (2) according to claim 3, whereby the magnet (37) is a permanent magnet.

5. A differential gear (2) according to claim 3 or 4, whereby the magnet (37) and the Hall effect sensor are arranged relative to one another in such a way that the magnetic field at the Hall effect sensor decreases sharply when the mobile element moves from either of its positions to its other position.

6. A differential gear (2) according to claim 5, whereby the magnet (37) and the Hall effect sensor are so arranged that the magnet (37) is closest to the Hall effect sensor when the mobile element (28) is in its first position.

7. A differential gear (2) according to any one of the foregoing claims, whereby the movement housing (26) comprises a longitudinal axis (43) and whereby the mobile element (28) is arranged for movement along the longitudinal axis (43).

8. A differential gear (2) according to claim 7, whereby the movement housing (26) comprises an internal space (27) in the form of a cylinder and whereby the mobile element (28) comprises a piston (30) arranged in the cylinder.

9. A differential gear (2) according to any one of the foregoing claims, whereby the first gearwheel (14) is rotatable about the first axis of rotation (13).

10. A differential gear (2) according to claim 9, whereby the locking element (23) is movable along the first axis of rotation (13).

11. A differential gear (2) according to claim 10, whereby the first gearwheel (14) comprises a first splined surface (24) and whereby the locking element (23) comprises a second splined surface (25) which is adapted to being in contact with the first splined surface (24) when the locking element (23) is in its first position.

12. A motor vehicle (1) comprising a differential gear (2) according to any one of the foregoing claims.
